# EUROPEAN PATENT APPLICATION

(11) **EP 1 889 816 A1**
(43) Date of publication of application: **20.02.2008**
(21) Application number: 06254268.3
(22) Date of filing: 15.08.2006
(51) Int. Cl.: C03B 3/02, C03B 5/00, C03B 37/04, F23C 3/00

(54) **Process and apparatus for making mineral fibres**

(71) Applicant: Rockwool International A/S, 2640 Hedehusene (DK)
(72) Inventor: Hansen, Lars Elmekilde, 2640 Hedehusene (DK); Hansen, Peter Binderup, 2640 Hedehusene (DK); Hansen, Lars Kresten, 2640 Hedehusene (DK); Jensen, Leif Moeller, 2640 Hedehusene (DK); Boellund, Lars, 2640 Hedehusene (DK)
(74) Representative: Samuels, Lucy Alice

(57) **Abstract**

The present invention provides a process for making a mineral melt comprising:
providing a circulating combustion chamber which contains circulating chamber gases,
injecting a stream of particulate fuel into the combustion chamber through a fuel feed pipe,
injecting combustion gas into the combustion chamber;
mixing the stream of particulate fuel with the combustion gas and with the circulating chamber gases by injecting into the combustion chamber secondary gas, through a secondary gas inlet, wherein the secondary gas is injected adjacent to the stream of particulate fuel and the injection speed of the secondary gas is at least 100 m/s greater than the injection speed of the particulate fuel;
suspending particulate mineral material in the circulating chamber gases and combusting the fuel, thereby melting the particulate mineral material and forming a mineral melt and hot exhaust gases; and
separating the hot exhaust gases from the melt and collecting the melt.

## Description

### Background to the Invention

This invention relates to the production of a mineral melt by burning combustible material in the presence of inorganic particulate material and thereby forming a melt. The melt can then be fiberised to form mineral fibres.

When the fibres are glass fibres, the melt is typically formed by adding inorganic particulate material to a preformed pool of melt in an electric or other tank furnace. This is appropriate having regard to the chemistry, physical properties and economics of the manufacture of glass fibres, typically having a chemical analysis, by weight of oxides, of above 10% Na₂O + K₂O, below 3% iron as FeO, below 20% CaO + MgO, above 50% SiO₂ and below 5% Al₂O₃. However this system is not practical nor economic, having regard to the melt temperature, other physical properties and economics, for the manufacture of rock, stone or slag fibres, typically having an analysis, by weight of oxides, of below 10% Na₂O + K₂O, above 20% CaO + MgO above 3% iron as FeO, and below 50% SiO₂ and, often, above 10% Al₂O₃.

The normal way of producing the melt for slag, stone or rock fibres is by means of a shaft furnace in which a self-supporting stack of inorganic particulate material is heated by combustion of combustible material in the furnace. The stack gradually melts and is replenished from the top, with melt draining down the stack and out from the bottom of the furnace. The normal furnace for this purpose is a cupola furnace.

It is necessary for the stack to be self-supporting and permeable to the combustion gases, which are generally generated by combustion of carbonaceous material in the stack. It is therefore necessary that everything in the stack is relatively coarse (in order that the stack is permeable) and has high physical strength and does not collapse until combustion or melting is well advanced. In practice this means that the carbonaceous material is coke and the particulate material is either coarsely crushed rock, stone or slag or is in the form of briquettes formed from fine particulate material.

Accordingly, if the material which is available is only available in finely divided form, it is necessary to incur the expense and inconvenience of forming it into briquettes. Briquetting usually uses sulphur-containing materials as binder, such as Portland cement with gypsum, and this means that the effluent is liable to have a high sulphur content, which has to be treated. The gas would typically contain H₂S and CO if it is not subjected to after-burning.

For this, and other reasons, it is generally necessary to subject the effluent gases from the cupola furnace to an after-burning stage, in order that the gases which are discharged into the atmosphere are environmentally satisfactory, and it would be desirable to be able to avoid the need for using an after-burner.

The cupola or other stack furnace system also has the disadvantage that conditions in the furnace always tend to be sufficiently reducing that some of the iron is reduced to metallic iron. This necessitates separating metallic iron from the melt, reduces wool production, leads to the provision of iron waste and also tends to incur the risk of corrosion in the zone containing iron and slag.

Another disadvantage is that the process does not have high thermal efficiency.

Despite these disadvantages, the process using a cupola or other stack furnace has been widely adopted throughout the world for the manufacture of rock, stone or slag fibres, e.g., having the analysis given above.

An alternative and entirely different system for the production of a mineral melt that avoids or reduces the disadvantages of the cupola system is disclosed in our earlier publication WO 03/002469. This system involves suspending powdered coal, or other fuel, in preheated combustion air and combusting the suspended fuel in the presence of suspended particulate mineral material in a circulating combustion chamber, i.e., a combustion chamber in which the suspended particulate materials and air circulate in a system which is or approaches a cyclone circulation system. This is commonly referred to as a cyclone furnace.

This process results in the formation of a mineral melt and hot exhaust gases. The suspended fuel is introduced into the pre-heated combustion air via an injection pipe to which the particulate material is added. To ensure that environmental effluent problems are minimised, particularly those associated with nitrogen oxides, hereinafter referred to as NOx, in the exhaust gases, these exhaust gases can be treated. Preferably they are treated by being contacted under NOx reducing conditions with the particulate material in a cyclone pre-heater before it enters the melting cyclone.

The cyclone furnace has significant advantages compared to cupola or other stack furnaces. With respect to fuel, it avoids the need for briquetting fine particles and a wide range of fuels can be used including, for example, plastic. Using a melting cyclone furnace eliminates the risk of reduction of the ores to iron and releases exhaust gases which are environmentally acceptable. The flexibility in melt capacity is much better than with a cupola furnace meaning that production can easily and quickly be switched, from, for example, 40% to 100% of total capacity so the time taken to respond to changing demand is greatly reduced. Furthermore, melting in a cyclone furnace is much quicker than is the case for a cupola furnace and is in the order of minutes, rather than in the order of hours.

Hence, using a melting cyclone furnace system is economically and environmentally desirable and the system disclosed in WO 03/002469 works well. There is, however, room for improvement in the process.

US 4,365,984 is also concerned with producing mineral wool using a melting cyclone furnace and involves feeding a particulate waste material containing inorganic non-combustible and organic combustible components into combustion air. The velocity of this particle stream is said to be in the region of 30 to 60 m/s. Combustion takes place once the particle stream enters the combustion zone.

Melting cyclones are also known in other fields. For example, US 4,566,903 is concerned with a pyrometallurgic treatment process where a particle stream of a nonferrous metal ore is mixed with primary combustion air and injected into the reaction chamber where is it ignited. The linear speed of the particle stream is said to be at least 35 m/s or, where secondary air is used, at least 100 m/s for example 177 m/s, to prevent flashback of ignited material from the reaction chamber into the particle feed. Secondary air can be injected through spiral housing surrounding the particle stream injection point and is thereby provided with a curved path. The secondary air is said to travel at about 100 m/s, a similar speed to the particle stream.

US 3,759,501 is in the field of copper production and uses cyclone smelting apparatus to produce blister copper from copper bearing materials. The copper bearing materials are introduced to the cyclone vessel in a pressurised stream with an oxygen bearing gas. The stream is produced using an oxygen lance which is positioned well within the feedpipe and mixes the copper bearing material with the oxygen but has no effect within the cyclone vessel.

Cyclone combustion chambers are also used in the burning of fuel for energy production as disclosed in US 2005/0039654, wherein a coal-in-air mixture is injected into the combustion zone. A further tertiary gas is injected at an undisclosed speed, preferably adjacent the coal-in-air mixture in a manner which provides oxygen enrichment without disturbing the existing cyclone flow patterns.

The present invention is specifically concerned with using a cyclone furnace to make a mineral melt and aims to improve upon existing processes of this type.

### Summary of the Invention

In a first aspect, the present invention relates to a process for making a mineral melt comprising:
providing a circulating combustion chamber which contains circulating chamber gases,
injecting a stream of particulate fuel into the combustion chamberthrough a fuel feed pipe,
injecting combustion gas into the combustion chamber;
mixing the stream of particulate fuel with the combustion gas and with the circulating chamber gases by injecting into the combustion chamber secondary gas, through a secondary gas inlet, wherein the secondary gas is injected adjacent to the stream of particulate fuel and the injection speed of the secondary gas is at least 100 m/s greater than the injection speed of the particulate fuel;
suspending particulate mineral material in the circulating chamber gases and combusting the fuel, thereby melting the particulate mineral material and forming a mineral melt and hot exhaust gases; and
separating the hot exhaust gases from the melt and collecting the melt.

In a second aspect, the present invention relates to apparatus suitable for conducting a process according to the first aspect of the invention, comprising:
a circulating combustion chamber,
a fuel feedpipe which opens into the combustion chamber,
a secondary gas inlet which concentrically surrounds the fuel feedpipe and has a converging nozzle at its opening;
means for injecting combustion gas into the chamber;
means for injecting particulate mineral material into the chamber;
means for separating hot exhaust gases from molten mineral material, and
means for collecting the melt.

It has been discovered that in prior art systems for producing a mineral melt in a circulating combustion chamber, sub-optimal efficiency was achieved due to slow and incomplete mixing between the fuel, combustion gases and hot circulating gases in the combustion chamber. This is believed to be due to the fact that when a stream of fuel particles enters the combustion chamber, rather than dispersing, the stream remains at least partially intact thereby resembling a "rod" of fuel particles in the chamber. This means that the fuel particles do not combust immediately as they are not mixed throughly with the combustion gas and the hot gases in the chamber.

Additionally, the fuel particles in different regions of the "rod" enter different regions of the circulation stream within the combustion chamber and consequently have very different residence times within the chamber. This leads to a substantial proportion of the fuel particles having a residence time within the combustion chamberwhich is too short to permit complete combustion. These particles are lost from the system completely in the exhaust gases or may combust in the exhaust outlet. This is inefficient and undesirable.

A major concern in this field is longevity of the cyclone furnace apparatus as the conditions are very stressful, particularly for parts of the apparatus through which particulate materials pass at speed. These parts are especially prone to wearing. Therefore, although simply increasing the speed at which suspended fuel particles enter the combustion chamber could result in more homogeneous mixing, it would also increase the wear of the apparatus to an unacceptable level.

The present invention addresses the problem of low fuel efficiency without compromising the longevity of the apparatus by providing secondary gas which is injected into the combustion chamber adjacent to the stream of particulate fuel and is travelling much faster than the fuel. It is preferred that the secondary gas is also travelling much (at least 100m/s) faster than the combustion gas. The secondary gas causes localised turbulence which results in mixing of the particulate fuel with the combustion gas and with the circulating chamber gases. Hence, the fuel particles are dispersed within the chamber and combust more quickly due to immediate mixing with both the hot circulating chamber gases and with the combustion gas. As the fuel particles are better dispersed within the circulating combustion gas, their residence time within the chamber is more uniform, which means that a high proportion of the fuel particles undergo full combustion within the chamber and contribute to producing the mineral melt. The invention reduces the amount of carbon monoxide formed, by enhancing complete combustion of the fuel.

A further advantage of the invention is that the secondary gas, which has a high velocity, of which a large component is directed into the body of the chamber, helps to support the circulation currents in the chamber and boosts the momentum of the circulating gases to maintain the cyclone effect.

In a preferred embodiment, the secondary gas is injected into the chamber through a nozzle which is structured so that it acts to increase the speed of the gas at the point of injection. This means that a lower gas speed is needed in the remainder of the gas inlet. This causes less wear than if the same injection speed was achieved without the use of a nozzle. The nozzle also imparts a lateral component to the secondary gas which is directed into the fuel stream. This increases the mixing effect.

The secondary gas is preferably pressurised, i.e. is at pressure greater than atmospheric pressure (1 bar), preferably a pressure of 2 to 4 bar. In this embodiment, the gas expands on entry to the chamber, which increases the turbulence and mixing of the fuel particles with the combustion gas and the circulating hot gases. Therefore, the important feature is for the secondary gas to be at a higher pressure than the pressure in the cyclone, which is usually ambient. In particular, advantageous mixing occurs when the pressure of the secondary gas is greater than or equal to twice the pressure of the gasses in the cyclone.

The secondary gas is preferably injected, i.e. exits the secondary gas pipe, at a sonic speed. "Sonic" in this context means a speed that is at or above the speed of sound. Under ambient conditions of temperature and pressure in air, this is a speed of about 340 m/s or above but it will vary substantially depending on the conditions and type of gas. What is important is that the secondary is gas travelling at or faster than the speed of sound under the particular conditions present. Secondary gas injected at such speeds has be found to have a substantial beneficial effect on fuel efficiency.

The invention includes a process of making fibres from the melt wherein the collected melt is taken as a stream to a fiberising apparatus, which can be a cascade spinner or a spinning cup or any other conventional centrifugal fiberising apparatus, and is fiberised to form fibres which are then collected, for instance as a web, and converted into bonded or other mineral wool products in conventional manner. The composition of the melt is generally such that the fibres are of the type which are conventionally described as slag, stone or rock fibres but the invention can also be used to make glass fibres.

The invention also includes processes in which the collected melt can be used for some entirely different purpose, for instance for the manufacture of cast products.

The second aspect of the invention relates to a preferred apparatus for making the melt, including a combustion chamber which has, opening into it, a fuel feed pipe and a secondary gas inlet wherein the secondary inlet concentrically surrounds the fuel feed pipe and has a converging nozzle at its opening.

### Detailed Description of the Invention

The circulating combustion chamber in the present invention is of the type which is frequently referred to as a cyclone furnace. Preferably it is water cooled. The construction of suitable cyclone furnaces is described in various patents including US 3, 855, 951, 4,135, 904, 4, 553, 997, 4, 544, 394, 4, 957, 527, 5,114,122 and 5,494, 863.

The particulate fuel that is used in the present invention is generally a carbonaceous material and can be any particulate carbonaceous material that has a suitable calorific value. This value can be relatively low, for instance as low as 10000kJ/kg or even as low as 5000kJ/kg. Thus it may be, for instance, dried sewage sludge or paper waste. Preferably it has higher calorific value and may be spent pot liner from the aluminium industry, coal containing waste such as coal tailings, or powdered coal.

In a preferred embodiment, the fuel is powdered coal and may be coal fines but preferably some, and usually at least 50% and preferably at least 80% and usually all of the coal is made by milling lump coal, for instance using a ball mill. The coal, whether it is supplied initially as fines or lump, may be good quality coal or may be waste coal containing a high inorganic content, for instance 5 to 50% inorganic with the balance being carbon. Preferably the coal is mainly or wholly good quality coal for instance bituminous or sub-bituminous coal (ASTM D388 1984) and contains volatiles which promote ignition.

The fuel particles preferably have a particle size in the range from 50 to 1000µm, preferably about 50 to 200, generally about 70µm average size, with the range being 90% below 100µm.

The fuel is fed into the chamber through a feed pipe in a conventional manner to give a stream of fuel particles. This normally involves the use of a carrier gas in which the fuel particles are suspended. The carrier gas can be air, preferably at ambient temperature to avoid flashbacks or a less reactive gas such as nitrogen. The feed pipe is preferably cylindrical.

Combustion gas is introduced into the chamber and can be at ambient temperature but is preferably preheated. The maximum desirable temperature that the combustion gas is pre-heated to is around 600°C, and the preferred preheating is to between 300 and 600 °C, most preferably to around 500 to 550°C. The combustion gas can be any gas in which the fuel can combust, for example, air, air enriched with oxygen or pure oxygen. It can also include propane or methane, but in the preferred embodiments is air or oxygen. Where pure oxygen is used it is preferably at ambient temperature, rather than being preheated. This may be introduced through the feed pipe with the fuel suspended in it, especially when the gas is at a relatively low temperature. The fuel should not begin to combust in the fuel pipe before it enters the chamber (a phenomenon known as "flash back") so low gas temperatures are needed in this embodiment. However, it is preferably introduced separately through one or more combustion gas inlets which can be located in the vicinity of the fuel feed pipe so that the combustion gas is directed into the chamber in the same region as the fuel, to allow for efficient mixing. In the most preferred embodiment, the combustion gas inlet concentrically surrounds the feed pipe and the secondary gas inlet, as discussed below.

Whether or not they are introduced together, the speed at which the combustion gas and the fuel are injected into the chamber is relatively low (preferably between 1 and 50 m/s), so as to minimise wear of the apparatus. When the fuel is suspended in the combustion gas, the speed is preferably between 5 and 40 m/s. When they are introduced separately, which is preferred, the injection speed of the fuel is preferably 20 to 40 m/s. By using secondary gas with a high speed, and hence momentum, the injection speed of the combustion gas can vary over a wider range from, for example, 5 to 100 m/s and is preferably in the range of 20 to 75 m/s.

In the present invention, secondary gas is also injected into the combustion chamber with the purpose of dispersing the fuel particles in the chamber and thereby mixing them with the combustion gas and the circulating gases. The secondary gas is injected through a secondary gas inlet which is positioned to inject the secondary gas adjacent to the stream of fuel particles at or near to the point at which they enter the chamber. This brings the secondary gas into contact with the fuel stream and allows for mixing.

The primary mechanism by which the secondary gas causes dispersal of the fuel particles and their mixing with the combustion gas and circulating gases is the differential in injection speed. The secondary gas is injected at a speed of at least 100 m/s greater than the fuel particles and the combustion gas. This results in shear forces between the stream of secondary gas and the slower moving fuel and gases surrounding it which disrupt the flow of fuel particles, combustion gas and chamber gases thereby resulting in thorough mixing. The secondary gas can be any gas that causes this mixing effect, for example, air, air enriched with oxygen, pure oxygen, propane, methane or nitrogen.

On injection, the major component of the secondary gas will continue in the direction in which it injected, linearly straight from the secondary gas inlet into the chamber. Therefore, most of the directional speed i.e. velocity, will be in the direction of injection. As the secondary gas is travelling quickly, its momentum (a product of speed and mass flow) is high even if it is used in relatively low quantities. This momentum helps to maintain the cyclone currents. The secondary gas preferably also has a minor component which is travelling laterally, into the stream of fuel particles which helps with rapid and extensive mixing.

The secondary gas inlet may be situated anywhere in the vicinity of the feed pipe to inject the gas adjacent to the stream of fuel particles but, to optimise the mixing effect, the secondary gas inlet preferably concentrically surrounds the fuel feed pipe. When the combustion gas is not introduced though the fuel feed pipe with the fuel, the combustion gas inlet preferably concentrically surrounds the secondary gas inlet. The secondary gas and combustion gas inlets are preferably cylindrical.

To optimise the mixing effect, the injection speed of the secondary gas is preferably at least 200 m/s greater than the injection speed of the fuel and the combustion gas and is usually at least 250 m/s, preferably at least 300 m/s. In the most preferred embodiment, the injection speed of the secondary gas is sonic, i.e. at or above the speed of sound. This varies depending on the temperature and type of gas (for example, in ambient air the speed of sound is about 340m/s whereas for air at 550°C it is about 575 m/s).

It is also preferred that the gas is pressurised, preferably to a pressure of at least twice the pressure in the chamber and is preferably between 2 and 4 bar. In this case, the gas expands on entering the chamber which increases the mixing effect further.

To achieve the high injection speed, it is preferred to inject the secondary gas though a converging nozzle as this increases the gas speed, meaning that lower gas speeds are needed in the remainder of the gas inlet, thereby minimising wear of the gas inlet and ensuring maximum longevity of the apparatus

Any nozzle can be used, for example conventional nozzles such as "Laval nozzles" which increase the secondary gas to a supersonic speed.

The preferred nozzle is shaped to increase the speed of the gas by to sonic speeds and is also shaped to direct a component of the gas stream laterally into the fuel stream. The interior surface of the nozzle preferably converges at an angle of between 20 to 40°, preferably of 25 to 35° wherein this is the angle at which the converging nozzle deviates from the previous part of the inlet. In contrast with a Laval nozzle, the opening of the nozzle is preferably the narrowest point, which increases the lateral directional component of the injected gas.

The secondary gas may be preheated but in the interests of energy efficiency and ease of compression is preferably not preheated. Although the secondary gas may provide oxygen for combustion, or be a combustible gas such as methane or propane, its main purpose is to promote mixing with the combustion gas so inert gases such as nitrogen can be used. In the process of the invention, only a relatively small amount of secondary gas is needed to give optimal mixing and, indeed, as the secondary gas is generally not preheated, the amount should be kept to a low level so that the high temperature in the chamber needed for melting is maintained. In this invention, the secondary gas preferably makes up less than 40% by weight of the total injected gas and more preferably makes up between 10 and 30 %, most preferably between 15 and 20% of the total injected gas. The "total injected gas" includes the secondary gas plus the combustion gas as well as any other gas that is injected into the chamber.

The particulate mineral material, which is melted in the chamber to produce the mineral melt, is introduced into the chamber so that it becomes suspended in the gases therein. The point at which the particulate mineral material is added is not critical and it can be mixed with the fuel and injected through the fuel feed pipe. It is, however, preferable to add the particulate mineral material into the burning fuel. This can be achieved by adding the particulate mineral material into the chamber though an inlet in a conventional way, for example at the top of the chamber.

Within the circulating combustion chamber, combustion of the particulate coal takes place and the particulate mineral material is converted to melt while suspended in gas. Melt and particulate material may be thrown onto the walls of the chamber and will flow down the chamber, predominantly as melt. The circulating chamber can be a horizontal or inclined cyclone but often is vertical. It may lead downwardly into a tank for collecting melt. The chamber may open directly into the tank without going through a conical or other restricted exit duct of the type which is conventional in many systems, since providing a conical duct as the exit has no advantage and impedes flow from the base of the chamber. Preferably, the circulating chamber leads downwards into a collecting zone where the melt is then transported for use in a fiberisation process. For example, the melt may be collected then travel via a gutter to discharge positions from where the melt is discharged onto fiberising spinners.

The tank can be in the base of the chamber (for instance as described in US 4,553,997) or it can be a settling tank of considerably enhanced volume. The settling tank should have sufficient gas volume to allow for precipitation of the melt droplets from the exhaust gas and sufficient melt volume to ensure dissolution of particles, which may only be partly melted, and for homogenisation of the melt. There may be a gas burner or other means for applying extra energy to the settling tank if necessary, for instance to raise the temperature of the exhaust gases, especially during start up.

The melt is collected, for example by being run off from the tank, when appropriate, through a gutter as a stream and may then be subjected to fiberisation in conventional manner, for instance using a cascade spinner or a spinning cup or any other conventional centrifugal fiberising process. Alternatively it may be run off to some other manufacturing process, e.g., a casting process.

The hot exhaust gases rise up and are collected at the top of the circulating combustion chamber. In order to ensure that the level of environmentally harmful NOx in the separated exhaust gases is minimised, the exhaust gas is preferably treated. In a preferred embodiment, it is treated by contacting it with the particulate material under NOx reducing conditions in a cyclone preheater. This has the advantage of both reducing NOx in the exhaust gas and preheating the particulate material so that it melts more easily in the furnace.

The NOx reducing conditions are preferably generated by including in the cyclone preheater nitrogenous material which will reduce NOx under the conditions prevailing in the preheater. The nitrogenous material may be included in the hot exhaust gas which is fed to the preheater or may be added direct to the preheater.

The nitrogenous material which is included in the preheater cyclone is preferably ammonia or ammonium compound, an amine or urea, wherein the urea may be free or, more preferably, is a resinous product such as a urea formaldehyde or phenol urea formaldehyde resin. It is particularly preferred that the NOx reducing conditions are generated by including in the particulate material waste bonded mineral wool which is fed to the preheater cyclone, wherein the waste bonded mineral wool contains a urea resin (usually phenol urea resin) and/or ammonia or an ammonium compound (for instance as a buffering agent for resin in the waste wool). Thus, by the invention, it is possible simultaneously to utilise waste material and to react it under appropriate conditions so as to reduce a significant amount of the NOx in the exhaust gases to nitrogen.

The amount of ammonia or ammonia derivative or other NOx-reducing compound is preferably 1 to 4 (preferably 1 to 2 or, especially, 1 to 1.7) moles per mole NOx and the reaction is preferably conducted at a temperature of 800°C to 1050°C. The reaction residence time is preferably at least 0.3 seconds and most preferably at least 1 second. Typically this can be the residence time of the particulate mineral material in the cyclone preheater, and/or the ducting, until the exhaust gas is cooled below reaction temperature, e.g., below 800°C. Under these conditions, preferably with a temperature in the range 800 to 1050°C, substantially all the NOx is reduced to nitrogen, even though the atmosphere in the preheater is preferably oxidising.

Thus, according to another preferred feature of the invention the gaseous atmosphere in the cyclone preheater contains excess oxygen, preferably in an amount of at least 1% or 2% and most preferably at least 4%, for instance up to 8% by volume by weight of the gaseous atmosphere. Despite the oxidising nature of the atmosphere, NOx is reduced by the added ammonia or other nitrogenous compound under the conditions defined for the preheater.

The preheater can thus simultaneously operate as a NOx reducer and an oxidising after-burner to burn pollutants such as hydrogen sulphide and carbon monoxide from the circulating combustion chamber.

Preferably the exhaust gases which are separated from the melt and which are then fed to the cyclone preheater contain less oxygen than the amount which is present in the cyclone preheater and so preferably gas or other source of oxygen is added to the exhaust gases either in the preheater or between the melt and the preheater.

Preferably the combustion in the circulating combustion chamber is near stoichiometric or even sub-stoichiometric. As a result of this, the amount of NOx generated during the combustion is minimised. The ratio of oxygen to combustible material is generally from 0.8 to 1, most preferably 0.85 to 0.99, often around 0.92 to 0.97.

Thus, in preferred process and apparatus according to the invention the combustion of the carbonaceous particulate material and the melting of the particulate mineral material is conducted under slightly sub-stoichiometric conditions and the exhaust gas from this is then adjusted to be slightly oxidising and the exhaust gases are then, in a single operation, both subject to oxidising after burning and to NOx reduction, in a cyclone preheater.

The temperature of the exhaust gases when they are separated from the melt is preferably 1200 to 1800°C, often 1600 to 1700°C. The temperature of the gases entering the cyclone preheater is generally in the range 1000 to 1500°C. When, as is normal, this temperature is less than the temperature of the gas when it leaves the melt, the reduction in temperature can be achieved by dilution with gas and/or a liquid, preferably water. The proportions of the inflowing exhaust gas and the particulate mineral material should be such that the mineral material is preheated to the desired temperature, typically 700° or 800 to 1050°C, in the cyclone preheater.

The exhaust gases from the preheater cyclone are used for preheating the gas for the combustion of the carbonaceous material and generally the gases have a temperature in the range 800 to 900°C when they emerge from the preheater cyclone. They are preferably used for heat exchange with the incoming combustion gas so as to preheat that gas to a temperature of at least 500°C and preferably 600 to 900, most preferably around 700 to 800°C.

### Description of the Figure

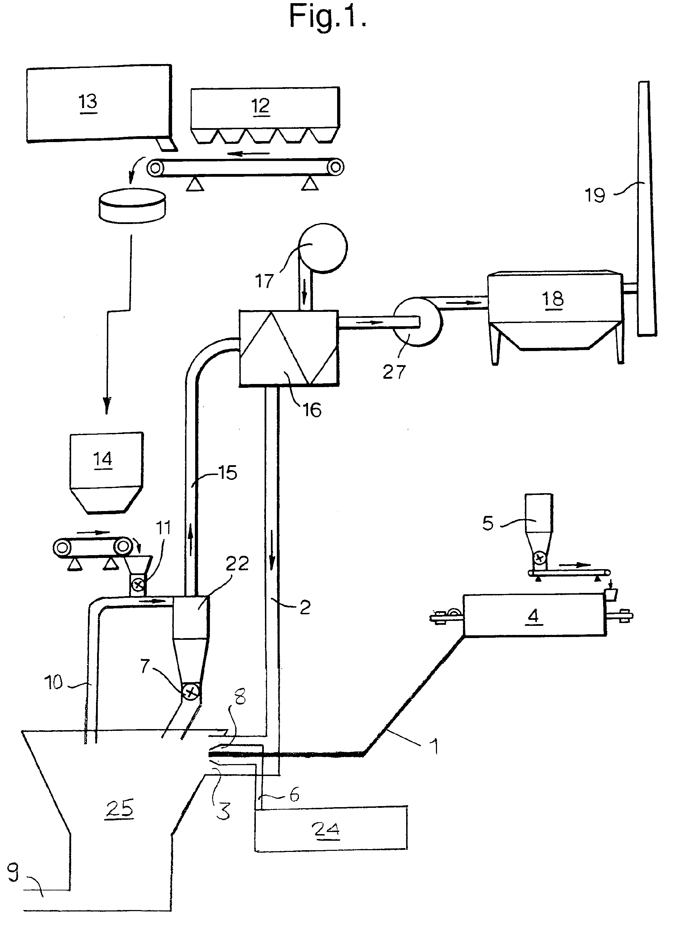

A preferred embodiment of the invention will now be described by reference to the accompanying drawing, figure 1, which is a flow-diagram showing a preferred embodiment of the invention.

Lump coal is supplied from a silo 5 and milled using a ball mill, 4. It is then suspended in carrier air at ambient temperature and conveyed through fuel feed pipe 1 before being injected at the end of the feed pipe 1 into the circulating combustion chamber 25.

Particulate material is supplied from hoppers 12 and 13, wherein hopper 13 is particularly important because it contains waste particulate material which contains a source of nitrogen, such as bonded mineral wool wherein the bonding agent is a urea resin. The various materials from hoppers 12 and 13, with additional pulverisation in a ball mill or other mill if necessary, are then blended and fed into a silo 14 and from this they are continuously discharged into the feed 11. From here they pass through the cyclone pre-heater 22 into the circulating combustion chamber 25 through feed 7.

The combustion gas, air in this case, is supplied from ventilator 17, through heat exchanger 16 and via duct 2 into combustion gas inlet 3 from where it is injected into the circulating combustion chamber 25.

Secondary gas, in this case air, is provided from source 24 via duct 6 to nozzle 8 from where it is injected into the circulating combustion chamber 25 at sonic speeds.

Within the circulating combustion chamber 25, the secondary air causes rapid mixing of the coal with the combustion air and the hot gases which are circulating within the chamber. The secondary air also supports the cyclone effect within the chamber due to its high velocity into the chamber.

Following the rapid mixing, the fuel combusts and the particulate mineral material is converted to melt while suspended in air. The melt and particulate material may be thrown on to the walls of the chamber and will flow down the chamber, predominantly as melt.

The melt is run off from the chamber (optionally via a settling tank, not shown), through gutter 9 as a stream. It may then be subjected to fiberisation in conventional manner or may be run off to some other manufacturing process.

Exhaust gases free of melt are taken from the circulating combustion chamber 25 through duct 10. Most or all of the particulate material which is to be melted is preheated by the exhaust gases, by being fed into the flowing stream of exhaust gas in duct 10 by the feed 11, and the resultant suspension in gas is then passed into the preheater cyclone 22.

The exhaust gases in duct 10 approaching feed 11 will usually have been cooled down by dilution with air and/or water (not shown) to a temperature of 1200°C to 1400°C suitable for preheating the particulate material in the cyclone 22 to a temperature in the range 700 to 1000°C, generally around 800°C.

These exhaust gases usually leave the cyclone 22 at a temperature in the range 800 to 1000°C, preferably around 900°C. At these temperature, there will be selective non-catalytic reduction of NOx predominantly to nitrogen, with the result that the exhaust gases from the cyclone 22, which leave through duct 15, will have a satisfactorily low NOx content and will preferably be substantially free of NOx.

The exhaust gases then pass through a heat exchanger 16 by which there is indirect heat exchange with combustion air from ventilator 17, thus generating the desired stream of preheated combustion air through duct 2. The waste gas is vented through ventilator 27, and filter 18 to stack 19.

## Claims

1. A process for making a mineral melt comprising:
providing a circulating combustion chamber which contains circulating chamber gases,
injecting a stream of particulate fuel into the combustion chamber through a fuel feed pipe,
injecting combustion gas into the combustion chamber;
mixing the stream of particulate fuel with the combustion gas and with the circulating chamber gases by injecting into the combustion chamber secondary gas, through a secondary gas inlet, wherein the secondary gas is injected adjacent to the stream of particulate fuel and the injection speed of the secondary gas is at least 100 m/s greater than the injection speed of the particulate fuel;
suspending particulate mineral material in the circulating chamber gases and combusting the fuel, thereby melting the particulate mineral material and forming a mineral melt and hot exhaust gases; and
separating the hot exhaust gases from the melt and collecting the melt.

2. A process according to claim 1, wherein the secondary gas inlet concentrically surrounds the fuel feed pipe.

3. A process according to claim 1 or 2, wherein the secondary gas inlet has a converging nozzle at the end from which the secondary gas is injected.

4. A process according to claim 3, wherein the interior surface of the nozzle converges at an angle of between 20 to 40°, preferably of 25 to 35°.

5. A process according to any preceding claim, wherein the injection speed of the fuel is between 1 and 50 m/s and the injection speed of the combustion gas is between 1 and 100 m/s and the injection speed of the secondary gas is at least 200 m/s greater than the injection speed of the fuel and the combustion gas.

6. A process of making a mineral melt according to any preceding claim, wherein the injection speed of the secondary gas is at least 250 m/s, preferably at least 300 m/s, most preferably at least 350 m/s.

7. A process according to any of claims 1 to 5, wherein the injection speed of the secondary gas is sonic.

8. A process according to any preceding claim, wherein a minor component of the secondary gas travels laterally from the direction of injection, into the stream of particulate fuel.

9. A process according to any preceding claim, wherein the combustion gas is injected through a combustion gas inlet which concentrically surrounds the secondary gas inlet.

10. A process according to any of claims 1 to 8, wherein the combustion gas is injected with the fuel suspended in it, through the fuel feed pipe.

11. A process according to any preceding claim, wherein the secondary gas makes up less than 40% by weight of the total injected gas, preferably between 10 and 30%, most preferably between 15 and 20%.

12. A process according to any preceding claim, comprising the additional step of flowing a stream of the collected melt to a centrifugal fiberising apparatus and forming mineral fibres by centrifugally fiberising the stream of melt.

13. Apparatus suitable for conducting a process according to any preceding claim, comprising:
a circulating combustion chamber,
a fuel feedpipe which opens into the combustion chamber, a secondary gas inlet which concentrically surrounds the fuel feedpipe and has a converging nozzle at its opening;
means for injecting combustion gas into the chamber;
means for injecting particulate mineral material into the chamber;
means for separating hot exhaust gases from molten mineral material, and
means for collecting the melt.
